# EUROPEAN PATENT APPLICATION

(11) **EP 3 663 821 A1**
(43) Date of publication of application: **10.06.2020**
(21) Application number: 18906763.0
(22) Date of filing: 28.08.2018
(51) Int. Cl.: G02B 6/44

(54) **FULLY DRY OPTICAL CABLE AND MANUFACTURING METHOD THEREFOR**

(30) Priority: 23.02.2018 CN 201810155466
(71) Applicant: Fiberhome Telecommunication Technologies Co., Ltd, Hubei 430000 (CN)
(72) Inventor: BAI, Wenjie, Wuhan, Hubei 430000 (CN); XIONG, Xiaomeng, Wuhan, Hubei 430000 (CN)
(74) Representative: Oberdorfer, Jürgen
(86) International application number: PCT/CN2018/102702
(87) International publication number: WO 2019/161650

(57) **Abstract**

Provided is a fully dry optical cable, which successively includes, from inside to outside: a light unit (1), a first layer of sheath (2), a braid layer (3) having multiple mesh holes, and a second layer of sheath (4), wherein the braid layer (3) is a reinforcing element, the optical cable has a first region where the first layer of sheath (2) and/or the second layer of sheath (4) extend, adjacent to a surface of the braid layer (3), to the mesh holes of the braid layer (3) and are embedded in the mesh holes, and at least part of the first region is a second region where the second layer of sheath (4) is embedded in the mesh holes and is connected to the first layer of sheath (2) as a whole, or, both the first layer of sheath (2) and the second layer of sheath (4) are embedded in the mesh holes and are connected as a whole. The reinforcing element of the optical cable is embedded between the two layers of sheath, and the two layers of sheath are connected as a whole, so that the reinforcing element does not slide relative to the sheaths, and the structure is more secure during traction in construction. A manufacturing method for an optical cable is further provided.

## Description

### Technical Field

The present invention refers to the technical field of optical fiber, in particular to a fully dry optical cable and manufacturing method thereof.

### Background

With the great-leap-forward development of optical communication in recent years, the demand for optical cable in various fields such as mine, oil field, submarine and electric power has been increasing. The optical cable in the prior art, from inside to outside, orderly comprises an optical unit, a reinforcing element and a sheath, wherein the optical unit comprises a loose tube, and multiple optical fiber bundles arranged in the loose tube, and water-repellent ointments are filled among the optical fiber bundles, as shown in the patent CN101840044A, a new tubular optical cable in the center of the optical fiber bundle.

At present, a communication cable can be divided into an aerial optical cable, a direct buried optical cable and a pipeline cable (including an air-blown optical cable) according to its construction mode. Because of the convenient construction characteristics of the aerial optical cable, it is favored by operators at home and abroad.

In the construction process of the aerial optical cable, it is usually fixed to the power pole tower with preformed armor rods and electric wires and cables. But the preformed armor rods are often tightly wrapped around the optical cable sheath; during the traction of the optical cable, the preformed armor rods will produce traction force on the sheath. Since the reinforcing element is located between the optical unit and the sheath, under the action of the traction force, a relatively large friction force is needed between the reinforcing element and the sheath to prevent the relative sliding of the reinforcing element and the sheath.

However, because it is easy to have improper control of the tightness of the sheath in the production process of the optical cable, resulting in insufficient friction between the sheath and the reinforcing element, which makes the reinforcing element unable to bear the force in time, resulting in the production of optical cables with unqualified stretching, so that the reinforcing element and the sheaths will slide relatively during the construction process of the aerial optical cable, which has a great influence on the performance of optical cable.

### Summary

In view of the defects existing in the prior art, the present invention aims at providing a fully dry optical cable, wherein the reinforcing element is embedded between the two layers of sheaths, and the two layers of sheaths are integrated, so that the reinforcing element and the sheaths will not slide relatively, and the structure is more solid during the construction traction process.

In order to achieve the above purpose, the present invention adopts the following technical solution:
a fully dry optical cable, wherein the optical cable, from inside to outside, successively comprises an optical unit, a first layer of sheath, a braiding layer with multiple meshes, and a second layer of sheath; the braiding layer is a reinforcing element, the optical cable has a first area, in which the first layer of sheath and/or the second layer of sheath close to the surface of the braiding layer extend to the meshes of the braiding layer and are embedded into the meshes; and at least part of the area in the first area is a second area, in which the second layer of sheath is embedded into the meshes and is integrated with the first layer of sheath, or both the first layer of sheath and the second layer of sheath are embedded into the meshes and integrated.

On the basis of the above technical solution, the braiding layer is braided from yarns.

On the basis of the above technical solution, the material of the yarn is one or more of aramid fiber, carbon fiber and glass fiber.

On the basis of the above technical solution, the thickness of the first layer of sheath is less than that of the second layer of sheath.

On the basis of the above technical solution, the materials of the first layer of sheath and the second layer of sheath are one or more of polyethylene, polyvinyl chloride, polyurethane, low smoke zero halogen plastic (LSZH) and nylon.

On the basis of the above technical solution, the first layer of sheath and the second layer of sheath are made of the same material.

The embodiment of the present invention further provides a method for manufacturing the fully dry optical cable, wherein the method comprises the following steps: the extrusion of the first layer of sheath, the braiding of the braiding layer, and the extrusion of the second layer of sheath are successively completed on the optical unit; the first layer of sheath and the braiding layer are not cooled before the extrusion operation of the second layer of sheath is completed, so that after being embedded into the meshes of the braiding layer, the second layer of sheath is integrated with the first layer of sheath, or after being embedded into the meshes, both the first layer of sheath and the second layer of sheath are integrated.

On the basis of the above technical solution, the method comprises the following detailed steps:
the optical unit passes through a first extruder, a braiding machine and a second extruder successively, the first extruder forms the first layer of sheath outside the optical unit, the braiding machine braids the yarn on the first layer of sheath, and the yarn is braided to form the braiding layer; the second extruder forms the second layer of sheath outside the braiding layer, and after being embedded into the meshes of the braiding layer in the liquid forming process, the second layer of sheath is integrated with the first layer of sheath.

On the basis of the above technical solution, the thickness of the first layer of sheath is less than that of the second layer of sheath.

On the basis of the above technical solution, after the optical unit completes the extrusion operation of the second layer of sheath, the optical unit further passes through a cooling device, which cools the first layer of sheath and the second layer of sheath.

Compared with the prior art, the present invention has the advantages as follows.

For the fully dry optical cable in the present invention, the braiding layer is a reinforcing element, the reinforcing element is embedded between the two layers of sheaths, the two layers of sheaths are integrated at the meshes of the braiding layer, so that the reinforcing element and the sheaths will not slide relatively during the construction traction process, and the structure is more solid.

The braiding layer of the present invention is braided from yarns, the braiding layer formed by this kind of braiding method is easy to be realized in the production process, as the process is simple and the production is convenient.

### Description of the Drawings

Fig. 1 shows a structural diagram of the fully dry optical cable in the embodiment of the present invention;
Fig. 2 shows a structural diagram of a part of the braiding layer in the embodiment of the present invention.

In the figure: 1 - optical unit, 2 - the first layer of sheath, 3 - braiding layer, 4 - the second layer of sheath.

### Detailed Description of the Embodiments

The present invention will be further described below in detail with reference to the drawings in combination with the embodiments.

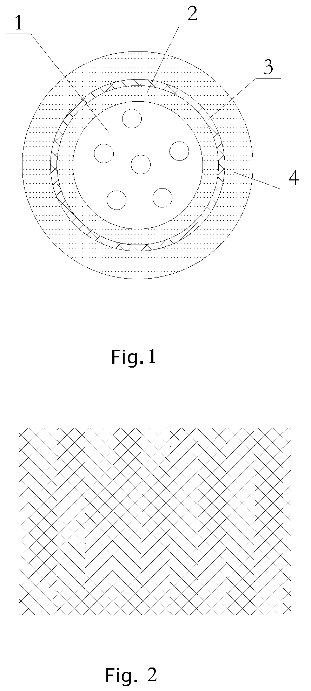

As shown in Fig. 1 and Fig. 2, the embodiment of the present invention provides a fully dry optical cable. The optical cable, from inside to outside, successively comprises an optical unit 1, a first layer of sheath 2, a braiding layer 3 with multiple meshes, and a second layer of sheath 4; the braiding layer 3 is a reinforcing element, the optical cable has a first area, in which the first layer of sheath 2 and/or the second layer of sheath 4 close to the surface of the braiding layer 3 extend to the meshes of the braiding layer 3 and are embedded into the meshes; and at least part of the area in the first area is a second area, in which the second layer of sheath 4 is embedded into the meshes and is integrated with the first layer of sheath 2, or both the first layer of sheath 2 and the second layer of sheath 4 are embedded into the meshes and integrated.

For the fully dry optical cable in the present invention, the braiding layer 3 is a reinforcing element, the reinforcing element is embedded between the two layers of sheaths, the two layers of sheaths are integrated at the meshes of the braiding layer, so that the reinforcing element and the sheaths will not slide relatively during the construction traction process, and the structure is more solid.

Further, the braiding layer 3 is braided from yarns, the braiding layer formed by this kind of braiding method is easy to be realized in the production process, as the process is simple and the production is convenient.

Preferably, the material of the yarn is one or more of aramid fiber, carbon fiber and glass fiber. The aramid fiber has good mechanical performance, tensile resistance; excellent flame retardant, heat resistance, good fire performance; and stable chemical performance, good acid and alkali resistance, so it can be applied to acidic or alkaline application environment. The carbon fiber has many excellent performance benefits such as high axial strength and high modulus, low density, high cost performance, no creep, resistance to ultra-high temperature in non-oxidizing environment, good fatigue resistance, specific heat and conductivity between nonmetal and metal, small thermal expansion coefficient, anisotropy, good corrosion resistance, good X-ray permeability, good thermal conductivity, good electromagnetic shielding, etc. The glass fiber has the advantages of good insulation, strong heat resistance, good corrosion resistance and high mechanical strength.

In this embodiment, the material of the yarn can be designed according to the application scenario of the optical cable. If the optical cable is used in the place prone to fire accidents, with relatively high fire performance, the aramid fiber shall be selected. If the optical cable is used in the occasion with many chemical reagents and in the environment vulnerable to acid or alkaline corrosion, the aramid fiber shall be selected. If the optical cable is used in the scene with more tensile traction or requiring electrical conductivity, the carbon fiber shall be selected. If the cable is used in insulated environment, the glass fiber shall be selected. Meanwhile it also can select multiple different materials to be mixed for the yarn material according to the actual situation, so that the performance can meet more requirements.

Further, the thickness of the first layer of sheath 2 is less than that of the second layer of sheath 4. When processing the second layer of sheath 4, because the thickness of the first layer of sheath 2 is relatively small, it is easy to soften. In the process of liquid extrusion forming of the second layer of sheath 4, the liquid second layer of sheath 4 tends to adhere to the first layer of sheath 2 after softening, and the softer first layer of sheath 2 is more closely adhered to the liquid second layer of sheath 4, so that the reinforcing element can be firmly embedded between the first layer of sheath 2 and the second layer of sheath 4, the reinforcing element and the sheaths will not slide relatively during the construction traction process, and the structure is more solid.

Further, the materials of the first layer of sheath 2 and the second layer of sheath 4 are one or more of polyethylene, polyvinyl chloride, polyurethane, low smoke zero halogen plastic (LSZH) and nylon. According to the performance demands of the optical cable, the first layer of sheath 2 and the second layer of sheath 4 can be made of the same material or not.

The embodiment of the present invention further provides a method for manufacturing the fully dry optical cable. The method comprises the following steps: the extrusion of the first layer of sheath 2, the braiding of the braiding layer 3, and the extrusion of the second layer of sheath 4 are successively completed on the optical unit 1; the first layer of sheath 2 and the braiding layer 3 are not cooled before the extrusion operation of the second layer of sheath 4 is completed, so that after being embedded into the meshes of the braiding layer 3, the second layer of sheath 4 is integrated with the first layer of sheath 2, or after being embedded into the meshes, both the first layer of sheath 2 and the second layer of sheath 4 are integrated.

In this embodiment, the first layer of sheath 2 and the braiding layer 3 are not cooled before the extrusion operation of the second layer of sheath 4 is completed, so that in the liquid forming process, the second layer of sheath 4 can be well integrated with the first layer of sheath 2, integrated and connected more closely; the reinforcing element can be firmly embedded between the two layers of sheaths, the reinforcing element and the sheaths will not slide relatively during the construction traction process, and the structure is more solid.

Specifically, the method for manufacturing the fully dry optical cable comprises the following steps: the optical unit 1 passes through a first extruder, a braiding machine and a second extruder successively, the first extruder forms the first layer of sheath 2 outside the optical unit 1, the braiding machine braids the yarn on the first layer of sheath 2, and the yarn is braided to form the braiding layer 3; the second extruder forms the second layer of sheath 4 outside the braiding layer 3, and after being embedded into the meshes of the braiding layer 3 in the liquid forming process, the second layer of sheath 4 is integrated with the first layer of sheath 2.

The method for manufacturing the fully dry optical cable in this embodiment further comprises the following steps: after the optical unit 1 passes through the second extruder, that is, after the optical unit 1 completes the extrusion operation of the second layer of sheath 4, the optical unit 1 also passes through a cooling device, which cools the first layer of sheath 2 and the second layer of sheath 4, so that the first layer of sheath 2 and the second layer of sheath 4 can be fixed and formed.

Further, the thickness of the first layer of sheath 2 is less than that of the second layer of sheath 4. When processing the second layer of sheath 4, because the thickness of the first layer of sheath 2 is relatively small, it is easy to soften. In the process of liquid extrusion forming of the second layer of sheath 4, the liquid second layer of sheath 4 tends to adhere to the first layer of sheath 2 after softening, and the softer first layer of sheath 2 is more closely adhered to the liquid second layer of sheath 4, so that the reinforcing element can be firmly embedded between the first layer of sheath 2 and the second layer of sheath 4, the reinforcing element and the sheaths will not slide relatively during the construction traction process, and the structure is more solid.

The method for manufacturing the fully dry optical cable in the present invention, the braiding layer 3 is braided from yarns, the braiding layer formed by this kind of braiding method is easy to be realized in the production process, as the process is simple and the production is convenient. Meanwhile, the first layer of sheath 2 and the braiding layer 3 are not cooled before the extrusion operation of the second layer of sheath 4 is completed, so that in the liquid forming process, the second layer of sheath 4 can be well integrated with the first layer of sheath 2, integrated and connected more closely; the reinforcing element can be firmly embedded between the two layers of sheaths, the reinforcing element and the sheaths will not slide relatively during the construction traction process; even if the sheath tightness control of the optical cable is not appropriate, it is not easy to occur relative sliding, so the production process requirements for the optical cable is not high, it is easy to produce qualified optical cable, improve the qualified rate of fiber optical cable production.

The present invention is not limited to the above-mentioned embodiments. Common technical personnel in the technical field also can make some improvements and polishes under the premise of not breaking away from the principle of the present invention, and these improvements and polishes shall be included in the protection scope of the present invention. The contents that are not described in detail in the Specification belong to the prior art public known by technology professionals in this field.

## Claims

1. A fully dry optical cable, wherein the optical cable, from inside to outside, successively comprises an optical unit (1), a first layer of sheath (2), a braiding layer (3) with multiple meshes, and a second layer of sheath (4) ; the braiding layer (3) is a reinforcing element, the optical cable has a first area, in which the first layer of sheath (2) and/or the second layer of sheath (4) close to the surface of the braiding layer (3) extend to the meshes of the braiding layer (3) and are embedded into the meshes; and at least part of the area in the first area is a second area, in which the second layer of sheath (4) is embedded into the meshes and is integrated with the first layer of sheath (2), or both the first layer of sheath (2) and the second layer of sheath (4) are embedded into the meshes and integrated.

2. The fully dry optical cable according to Claim 1, wherein the braiding layer (3) is braided from yarns.

3. The fully dry optical cable according to Claim 2, wherein the material of the yarn is one or more of aramid fiber, carbon fiber and glass fiber.

4. The fully dry optical cable according to Claim 1, wherein the thickness of the first layer of sheath (2) is less than that of the second layer of sheath (4).

5. The fully dry optical cable according to Claim 1, wherein the materials of the first layer of sheath (2) and the second layer of sheath (4) are one or more of polyethylene, polyvinyl chloride, polyurethane, low smoke zero halogen plastic (LSZH) and nylon.

6. The fully dry optical cable according to Claim 5, wherein the first layer of sheath (2) and the second layer of sheath (4) are made of the same material.

7. A method for manufacturing the fully dry optical cable according to any one of Claims 1-6, wherein the method comprises the following steps: the extrusion of the first layer of sheath (2), the braiding of the braiding layer (3), and the extrusion of the second layer of sheath (4) are successively completed on the optical unit (1); the first layer of sheath (2) and the braiding layer (3) are not cooled before the extrusion operation of the second layer of sheath (4) is completed, so that after being embedded into the meshes of the braiding layer (3), the second layer of sheath (4) is integrated with the first layer of sheath (2), or after being embedded into the meshes, both the first layer of sheath (2) and the second layer of sheath (4) are integrated.

8. The method for manufacturing the fully dry optical cable according to Claim 7, wherein the method comprises the following steps:
the optical unit (1) passes through a first extruder, a braiding machine and a second extruder successively, the first extruder forms the first layer of sheath (2) outside the optical unit (1), the braiding machine braids the yarn on the first layer of sheath (2), and the yarn is braided to form the braiding layer (3) ; the second extruder forms the second layer of sheath (4) outside the braiding layer (3), and after being embedded into the meshes of the braiding layer (3) in the liquid forming process, the second layer of sheath (4) is integrated with the first layer of sheath (2).

9. The fully dry optical cable according to Claim 7, wherein the thickness of the first layer of sheath (2) is less than that of the second layer of sheath (4).

10. The fully dry optical cable according to Claim 7, wherein after the optical unit (1) completes the extrusion operation of the second layer of sheath (4), the optical unit (1) further passes through a cooling device, which cools the first layer of sheath (2) and the second layer of sheath (4) .
